# FASCICULE DE BREVET EUROPEEN

(11) **EP 2 775 491 B1**
(45) Date de publication et mention de la délivrance du brevet: **02.05.2018**
(21) Numéro de dépôt: 14156759.4
(22) Date de dépôt: 26.02.2014
(51) Int. Cl.: H01G 9/02, H01G 9/26, H01G 11/12, H01G 11/52, H01M 2/14, H01M 2/16, H01M 2/18, H01M 12/00

(54) **Elément capacitif comprenant un séparateur collé sur un complexe**
Kapazitives Element, das einen auf einen Komplex geklebten Separator umfasst
Capacitive element including a separator adhered to a complex

(30) Priorité: 05.03.2013 FR 1351960
(43) Date de publication de la demande: 10.09.2014
(73) Titulaire: Blue Solutions, 29500 Ergué Gabéric (FR)
(72) Inventeur: Vigneras, Erwan, 29000 Quimper (FR)
(74) Mandataire: Regimbeau

(56) Documents cités:
- WO-A1-2007/028790
- JP-A- H0 367 458
- JP-A- 2009 146 792
- JP-A- 2012 104 318
- JP-A- 2012 142 153

## Description

L'invention concerne un ensemble de stockage d'énergie électrique, par exemple de type batterie ou supercapacité, et plus particulièrement l'élément capacitif d'un tel ensemble.

On connaît dans l'état de la technique des ensembles de stockage d'énergie comprenant au moins une première électrode, une deuxième électrode, les charges étant transmises par le biais d'un électrolyte dans lequel sont plongées les électrodes. Un séparateur isolant électriquement est également interposé entre les deux électrodes, pour éviter tout court-circuit entre les électrodes. L'élément capacitif est constitué en formant un empilement première électrode/ séparateur/ deuxième électrode/ séparateur qu'on enroule et qu'on insère dans une enveloppe comprenant un corps et au moins un couvercle, l'électrolyte étant également contenu dans cette enveloppe.

Dans ce type d'ensemble, on souhaite utiliser un séparateur réalisé en matière plastique, tel qu'en polypropylène poreux, qui présente des avantages en termes de coûts et d'isolation électrique et est notamment plus stable chimiquement que les séparateurs réalisés en papier, ce qui permet de limiter le vieillissement de l'ensemble de stockage.

Toutefois, utiliser ce type de séparateur peut présenter des inconvénients lors de la fabrication de l'ensemble de stockage. Des étapes de chauffage de l'enveloppe sont en effet généralement prévues, telles qu'une étape de polymérisation d'une colle pour relier le corps et le couvercle, et/ou une étape de soudage pour relier électriquement les électrodes à l'enveloppe et/ou une étape de traitement thermique de l'ensemble.

Durant ces étapes, la température du séparateur peut augmenter par conduction thermique. Or, ce séparateur étant poreux, il est susceptible de subir un retrait assez conséquent pour des températures correspondant à celles qu'il atteint lors des étapes sus-mentionnées du procédé. Il peut en résulter des zones aux extrémités des électrodes qui sont en contact direct et ainsi, en des courts-circuits se produisant dans l'ensemble de stockage.

Pour remédier à cela, on peut augmenter la longueur du séparateur placé dans l'élement capacitif mais cela augmente la quantité de matière et les coûts de fabrication de l'élément ainsi que son encombrement.

On connaît déjà d'après le document JP 2012-104318 un élément capacitif comprenant au moins deux complexes, chaque complexe comprenant au moins une électrode, les complexes étant superposés, et un séparateur isolant électriquement, réalisé en matière plastique, étant interposé entre chaque paire de complexes. En outre, les séparateurs sont reliés, par collage de la matière plastique fondue, au voisinage de l'une de leurs extrémités, à un organe relié à l'un des complexes adjacents.

L'invention a pour but de remédier aux inconvénients de l'état de la technique et de permettre l'utilisation d'un séparateur en matière plastique dans un ensemble de stockage d'énergie, en s'affranchissant des inconvénients précités.

A cet effet, l'invention a pour objet un élément capacitif comprenant au moins deux complexes, chaque complexe comprenant au moins une électrode, les complexes étant superposés, un séparateur isolant électriquement, réalisé en matière plastique poreuse, étant interposé entre chaque paire de complexes.

Conformément à l'invention, le ou au moins l'un des séparateurs est interposé entre deux complexes, dit « premier » et « deuxième » complexes, il est relié, par collage de la matière plastique fondue, au premier complexe, notamment au collecteur de celui-ci, ou à un organe relié à ce premier complexe, au voisinage de l'une de ses extrémités selon une ou au moins l'une des directions prédéterminées normale à la direction de superposition, il est relié au deuxième complexe, notamment au collecteur de celui-ci, ou à un organe relié à ce deuxième complexe, au voisinage de l'autre de ses extrémités, selon une ou au moins l'une des directions prédéterminées normale à la direction de superposition.

Dans ce cas, le séparateur est relié à une première extrémité au voisinage d'un bord du complexe et à une deuxième extrémité au voisinage du bord opposé du deuxième complexe.

On notera qu'un séparateur relié à un complexe au voisinage d'au moins une de ses extrémités peut être relié audit complexe en une zone distante de son extrémité On considère qu'une zone est « au voisinage » d'une extrémité si la distance entre la zone et l'extrémité est inférieure ou égale à 25% de la dimension totale du séparateur selon cette direction, que ce soit sur l'extérieur ou sur l'intérieur du complexe.

De cette façon, même si l'une ou plusieurs des étapes telles que mentionnées précédemment sont effectuées et que le séparateur chauffe, il ne subit que peu, voire pas de retrait, étant donné qu'il est collé au complexe ou à un organe relié au voisinage de ses extrémités. Le séparateur est donc verrouillé mécaniquement. On peut donc utiliser le séparateur dans l'ensemble de stockage d'énergie sans avoir besoin de modifier le procédé de fabrication de l'ensemble et sans pour autant augmenter le risque de court-circuit ou la quantité de matière utilisée pour former le séparateur de façon significative. Ainsi, on optimise la fabrication de l'ensemble sans altérer ses propriétés et sa durée de vie.

De plus, comme le retrait du séparateur est empêché par un verrouillage mécanique du séparateur, on peut augmenter sa porosité sans se préoccuper du retrait éventuellement induit par cette porosité. On peut ainsi utiliser un séparateur ayant une porosité plus importante afin d'optimiser l'imprégnation de l'élément capacitif.

On notera qu'on utilise les propriétés du séparateur pour relier celui-ci au complexe. Il n'est donc pas nécessaire d'apporter un matériau supplémentaire pour effectuer la liaison, ce qui rend l'étape supplémentaire simple à réaliser.

On notera également que la porosité du séparateur est éliminée dans les zones dans lesquelles la matière est refondue. Mais cela n'empêche pas le bon fonctionnement du séparateur, la refonte étant locale et n'affecte pas le séparateur dans son intégralité.

L'invention peut également comprendre l'une ou l'autre des caractéristiques de la liste suivante :
- la ou au moins l'une des extrémités du séparateur est agencée sur le complexe de sorte qu'elle recouvre le bord correspondant de l'électrode selon ladite direction prédéterminée,
- dans un deuxième mode de réalisation, l'organe de l'élément capacitif peut être un autre séparateur de l'élément, un collecteur, etc.
- au moins un complexe comprend, outre l'électrode, au moins un collecteur de courant métallique d'un seul tenant avec l'électrode. En particulier, au moins un complexe comportant d'un seul tenant deux électrodes et un collecteur de courant situé entre les deux électrodes. Toutefois, un complexe peut comprendre seulement une électrode et/ou une électrode associée à un collecteur. De préférence, le collecteur dépasse de l'électrode à au moins une extrémité de l'électrode selon la ou les directions prédéterminées. Le ou au moins l'un des séparateurs adjacents peut alors être relié à au moins une de ses extrémités au collecteur. Cela permet d'utiliser l'architecture classique de l'ensemble de stockage, sans ajouter de pièce spécifique pour la liaison avec le séparateur, tout en minimisant les risques de court-circuit ;
- le ou au moins l'un des séparateurs est relié au complexe dans au moins une portion supplémentaire, dite centrale, éloignée des deux extrémités du séparateur selon la direction prédéterminée, notamment par collage de matière plastique fondue. Dans le cas où le séparateur subit un retrait important, le relier au complexe dans au moins une portion intermédiaire du séparateur, située entre ses extrémités selon la direction prédéterminée, permet de répartir les contraintes mécaniques exercées sur le séparateur et d'augmenter la tenue mécanique de l'ensemble,
- le ou au moins l'un des séparateurs est relié au complexe et/ou à l'organe essentiellement sur toute la dimension du séparateur selon la ou au moins l'une des directions prédéterminées, de préférence continûment. On minimise là encore les risques de court-circuit. Le séparateur pourrait toutefois être relié au complexe par des points ou des traits de liaison discontinus : si ceux-ci sont suffisamment rapprochés, le retrait du séparateur sera très réduit et n'aura donc pas d'impact sur l'isolation électrique apportée par le séparateur;
- dans une autre configuration, le ou au moins l'un des séparateurs est relié à l'un au moins des complexes adjacents ou à l'organe selon au moins deux directions prédéterminées. Cela est notamment avantageux lorsque l'élément capacitif est constitué d'électrodes empilées mais non bobinées (dit « stacké ») ;
- comme indiqué plus haut, les électrodes et le ou les séparateurs peuvent simplement être empilés (ou stackés) ou enroulés les uns sur les autres une fois empilés (on dit alors également qu'ils sont bobinés).
- le ou au moins l'un des séparateurs est réalisé en polypropylène. Il pourrait également être réalisé en polyéthylène, notamment haute densité, en PTFE (polytétrafluoroéthylène), en PET (polyéthylène térephtalate), en PVDF (polyfluorure de vinylidène), en PPS (polysulfure de phénylène), en PEEK (polyéther éther kétone), ou composé de mélanges de ces polymères ou de l'un ou plusieurs de ces polymères avec un autre matériau, tel que du papier.
- le ou au moins l'un des séparateurs est interposé entre une électrode formant une anode de l'ensemble et une autre électrode formant cathode de l'ensemble ;

L'invention concerne également un ensemble de stockage d'énergie comprenant un élément capacitif selon l'invention. L'ensemble peut constituer une supercapacité - ou supercondensateur. Il peut toutefois également être une batterie, un condensateur, etc.

L'invention a également pour objet un procédé de fabrication d'un élément capacitif comprenant au moins deux complexes, chaque complexe comprenant au moins une électrode, les complexes étant superposés, un séparateur isolant électriquement, réalisé en matière plastique poreuse, étant interposé entre chaque paire de complexes, comprenant les étapes suivantes :
- on superpose au moins un premier complexe comprenant au moins une électrode, un séparateur isolant électriquement réalisé en matière plastique poreuse, et un deuxième complexe comprenant au moins une électrode de sorte que le séparateur soit interposé entre deux complexes,
- on chauffe localement le séparateur au voisinage de chacune de ses extrémités, selon au moins une directions prédéterminée normale à la direction de superposition, de sorte que la matière plastique fonde et que la matière fondue relie par collage, d'une part, l'une des extrémités du séparateur et ledit premier complexe ou un organe relié à ce premier complexe et, d'autre part, l'autre des extrémités du séparateur et ledit deuxième complexe ou un organe relié à ce deuxième complexe,
l'étape de chauffage étant effectuée après que le séparateur ait été superposé au premier complexe et avant ou après qu'il soit superposé avec le deuxième complexe.

Le séparateur est de préférence dimensionné de sorte que l'une de ses extrémités dépasse du complexe au niveau d'un bord de celui-ci, et il est relié à l'organe dans sa portion dépassant de l'électrode.

Dans un mode de réalisation de l'invention, le ou au moins l'un des séparateurs présente une dimension au moins double de celle d'une électrode d'au moins un des complexes selon la direction prédéterminée et est replié de façon à entourer ledit complexe, le séparateur étant relié au complexe au voisinage de ses extrémités, au niveau d'un même bord de l'électrode du complexe.

Le procédé selon l'invention peut également comprendre une étape d'enroulement des électrodes et du ou des séparateurs superposés, mise en oeuvre avant ou après l'étape de chauffage.

Le procédé concerne bien entendu préférentiellement un élément capacitif conforme à celui de l'invention, pouvant comprendre l'une ou plusieurs des caractéristiques listées ci-dessus.

On va maintenant décrire plusieurs exemples de réalisation de l'invention, non limitatifs de celle-ci :
- la figure 1 représente une coupe d'un ensemble de stockage d'énergie dans lequel peut être mis en place un élément capacitif selon l'invention,
- la figure 2 représente un détail en coupe d'un élément capacitif selon un premier mode de réalisation de l'invention,
- la figure 3 représente un schéma de principe d'un procédé de fabrication d'un élément capacitif tel que celui de la figure 2,
- la figure 4 représente un détail en coupe d'un élément capacitif selon un deuxième mode de réalisation de l'invention,
- la figure 5 représente un détail en coupe d'un élément capacitif selon un troisième mode de réalisation de l'invention,
- la figure 6 représente un détail en coupe d'une variante de l'élément capacitif du troisième mode de réalisation,
- la figure 7 représente un détail en coupe d'un élément capacitif selon un quatrième mode de réalisation de l'invention,
- la figure 8 représente un détail en coupe d'un élément capacitif selon un cinquième mode de réalisation de l'invention
- la figure 9 représente un détail en coupe d'un élément capacitif selon une autre variante de réalisation de l'invention.

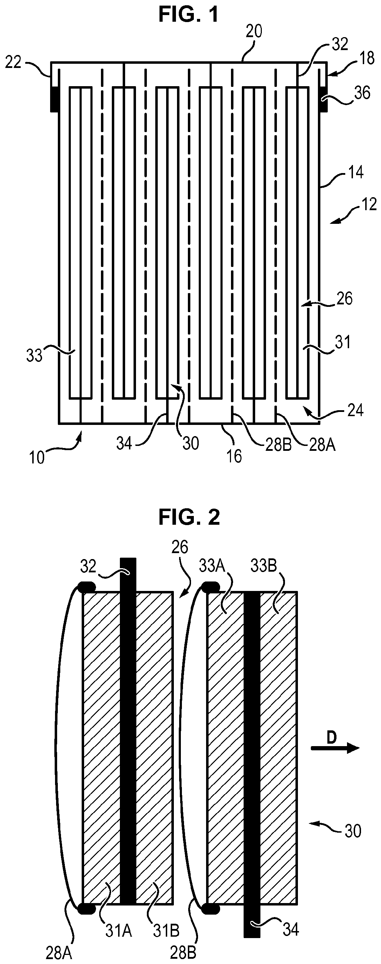

On a représenté sur la figure 1 un ensemble de stockage d'énergie 10 de type classique. Cet ensemble 10 comprend une enveloppe comportant un corps 12 cylindrique comprenant une paroi latérale 14 et un fond 16 formant une face d'extrémité de l'ensemble, ainsi qu'une ouverture à son extrémité opposée au fond 16. L'enveloppe comprend également un couvercle 18 comportant une face principale 20 recouvrant l'ouverture du corps 12 et formant l'autre face d'extrémité de l'ensemble et une jupe périphérique 22 destinée à longer la partie supérieure de la paroi latérale 14 de l'ensemble, à l'extérieur de celle-ci.

L'ensemble 10 comprend, à l'intérieur de l'enveloppe, un élément capacitif 24 composé d'un complexe d'électrode positive 26, de deux séparateurs 28A, 28B et d'un complexe d'électrode négative 30 superposés puis bobinés. Chaque complexe 26, 30 comprend en partie centrale un collecteur de courant 32, 34 et, sur chaque face du collecteur, une couche d'électrode 31, 33, respectivement positive pour le complexe 26 ou négative pour le complexe 30. Les électrodes positive et négative, également désignées respectivement cathode et anode, comprennent un charbon actif poreux permettant de stocker les charges. Les collecteurs de courant 32; 34, généralement réalisés en un matériau métallique, permettent de transmettre le courant ainsi créé vers l'extérieur de l'ensemble de stockage. Le séparateur, réalisé en un matériau isolant électriquement et poreux, permet d'isoler électriquement les deux électrodes (afin d'éviter les court-circuits) tout en laissant circuler les charges entre celles-ci. Pour les besoins de l'invention, le séparateur est réalisé en matière plastique poreuse, par exemple en polypropylène. On notera également qu'un électrolyte liquide est contenu dans l'enveloppe de l'ensemble. Cet électrolyte autorise la circulation des charges entre deux électrodes adjacentes.

Comme on le voit sur la figure 1, chaque complexe d'électrode d'un type particulier est relié à une face d'extrémité de l'ensemble de stockage. La liaison entre les collecteurs 32, 34 et l'enveloppe est notamment effectuée à l'aide d'une soudure. Les collecteurs 32 de l'électrode positive dépassent donc pour ce faire de l'empilement d'électrode à une première extrémité de l'empilement, selon une direction prédéterminée normale à la direction de superposition, tandis que les collecteurs 34 de l'électrode négative de l'empilement dépassent à une extrémité opposée, également selon la direction prédéterminée.

Le corps 12 et le couvercle 18 sont chacun réalisés en un matériau conducteur, notamment en métal, et forment les bornes respectives de l'ensemble. Le couvercle forme la borne positive alors que le corps forme la borne négative de l'ensemble. Le collecteur 32 associé aux électrodes positives est donc relié au couvercle 18 alors que le collecteur 34 associé aux électrodes négatives est relié au fond 16 de l'enveloppe. Pour éviter tout court-circuit, on notera que le corps et le couvercle sont isolés électriquement à l'aide d'un joint 36, par exemple en élastomère, placé entre la face intérieure de la jupe périphérique 22 et la face extérieure de la paroi latérale 14. Ce matériau permet également d'assurer l'étanchéité de l'ensemble et d'éviter toute fuite de l'électrolyte.

Ce type d'ensemble de stockage est relativement classique. On va maintenant s'intéresser au coeur de l'invention, à savoir l'empilement constituant l'élément capacitif contenu dans l'ensemble. On notera également que l'ensemble décrit ci-dessus n'est pas limitatif de l'invention. Celui-ci peut être de n'importe quelle configuration tant qu'il contient un élément capacitif selon l'invention.

Dans un premier mode de réalisation, représenté en coupe à la figure 2, on voit que le séparateur 28Aest relié à chacune de ses extrémités selon la direction prédéterminée, normale à la direction de superposition D, au complexe positif 26, plus exactement à l'électrode 31A. De même on voit que le séparateur 28B est relié à chacune de ses extrémités selon la direction prédéterminée, normale à la direction de superposition D, au complexe positif 30, plus exactement à l'électrode 33A.

Le séparateur est superposé à l'électrode au niveau de son extrémité selon la direction prédéterminée, de sorte qu'il recouvre toute la surface de l'électrode normale à la direction de superposition, susceptible d'être en contact avec une électrode en vis-à-vis et donc le bord de l'électrode selon la direction prédéterminée.

La liaison est réalisée à l'aide des propriétés de la matière plastique composant le séparateur. Celle-ci est en effet chauffée pour se trouver fondue et pressée contre l'électrode 31A. La matière plastique fondue adhère alors à l'électrode, ce qui est possible car la température de fusion du charbon actif constituant l'électrode est supérieure à celle des séparateurs. Lorsqu'elle refroidit, la liaison est consolidée. On notera que la liaison est de préférence configurée de sorte que le séparateur est relié à chacun des collecteurs tout le long de l'extrémité correspondante.

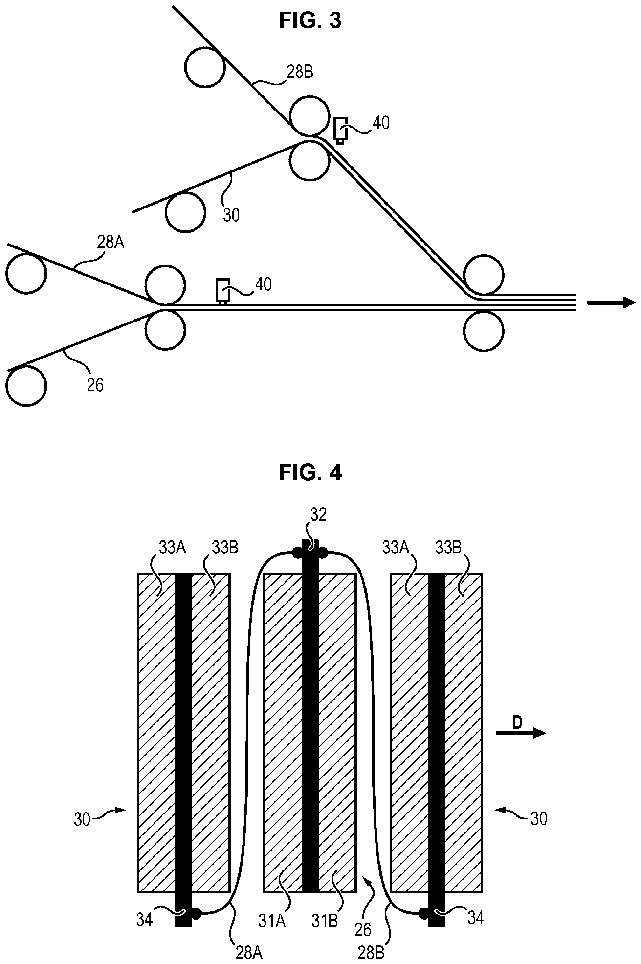

L'élément capacitif est alors réalisé de la façon suivante :
- comme on le voit dans la figure 3, on empile les différentes couches électrode positive 26 - séparateur 28A - électrode négative 30 - séparateur 28B, en les entraînant entre des cylindres permettant de constituer l'empilement. On constitue d'abord deux empilements (électrode positive 26 - séparateur 28A et électrode négative 30 - séparateur 28B). Le séparateur est conçu de sorte que sa dimension transversale est légèrement supérieure à celle des couches d'électrodes (mais pas forcément à celle des collecteurs),
- on applique deux galets chauffants 40 à chaque extrémité des deux empilements intermédiaires selon la direction prédéterminée normale à la direction de superposition, les deux galets étant agencés pour relier les deux séparateurs 28A, 28B adjacents à leurs extrémités sur l'électrode correspondante 31A, 33A. Ils sont placés dans la chaîne de fabrication de l'empilement, avant la réunion des deux empilements intermédiaires. Ces galets permettent de chauffer le séparateur tout en l'appuyant contre l'électrode à l'extrémité correspondante de l'empilement et de réaliser la liaison susmentionnée entre le séparateur et le complexe. De cette façon, on relie facilement le séparateur continûment au complexe correspondant.

Une fois l'élément capacitif réalisé, on l'insère dans l'enveloppe, on le relie au corps et au couvercle, on relie le couvercle et le corps et on imprègne l'ensemble en insérant l'électrolyte dans l'enveloppe. Ces étapes sont classiques et ne seront donc pas détaillées ici.

Dans un autre mode de réalisation détaillé à la figure 4, on voit que le séparateur 28 est relié à chacune de ses extrémités selon la direction prédéterminée, normale à la direction de superposition D, à l'un des complexes positif ou négatif. Plus particulièrement, à son extrémité supérieure, il est relié au collecteur 32 de l'électrode positive (il s'agit en effet de l'extrémité à laquelle ce collecteur dépasse de l'empilement) et, à son extrémité inférieure, il est relié au collecteur 34 de l'électrode négative (il s'agit en effet de l'extrémité à laquelle ce collecteur dépasse de l'empilement). Il recouvre ainsi totalement les surfaces de matériau actif des électrodes positive et négative susceptibles d'être en contact.

Comme on le voit sur la figure 4 chaque collecteur 32, 34 est relié à un premier séparateur sur une première face et à un deuxième séparateur sur une deuxième face. Les séparateurs relient ainsi les électrodes dans un motif du type « en accordéon ».

On notera que ce mode de réalisation est plus adapté à un ensemble de type « stacké » comprenant une pluralité de complexes empilés.

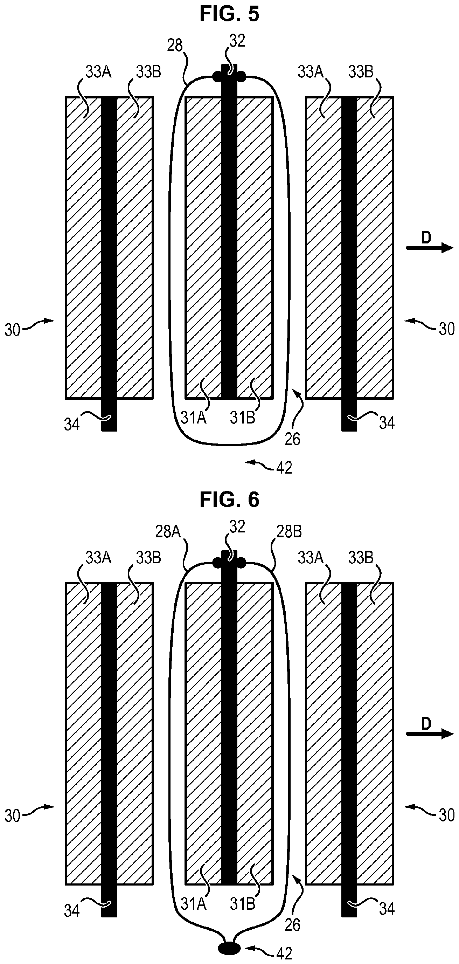

Dans un autre mode de réalisation, représenté en coupe à la figure 5, l'empilement comprend non pas deux séparateurs distincts mais un unique séparateur de dimension double de celle de l'électrode selon la direction prédéterminée. Le séparateur 28 est replié pour entourer une électrode, à savoir l'électrode positive 26 sur la figure représentée, et est relié au collecteur 32 de l'électrode positive à chacune de ses extrémités. Plus précisément, une première extrémité du séparateur 28 est reliée à une première face du collecteur 32 dans sa partie dépassant de l'empilement et une deuxième extrémité du séparateur 28 est reliée à une deuxième face du collecteur 32 également dans sa partie dépassant de l'empilement. La liaison séparateur 28 -collecteur 32 est donc effectuée dans ce mode de réalisation, à une seule et même extrémité de l'empilement, au voisinage d'un même bord de l'électrode 26.

L'élément capacitif est alors fabriqué de la façon suivante :
- on empile le séparateur 28 et l'électrode positive 26 de sorte que l'extrémité du séparateur corresponde environ à l'extrémité de l'électrode positive 26 , selon la direction transversale des différents éléments. La dimension du séparateur 28 selon cette direction est double de celle du complexe,
- on replie le séparateur 28 en son milieu selon la direction longitudinale de sorte qu'il recouvre le complexe d'électrode positive 26 sur les deux faces de celui-ci. Chaque pan de séparateur 28 recouvre ainsi une face de l'électrode 26,
- on chauffe les pans du séparateur pour relier ce dernier avec le collecteur 32 de l'électrode positive 26, à l'aide de deux galets, positionnés pour enserrer le collecteur 32 à l'extrémité à laquelle il dépasse de l'empilement et les extrémités libres des deux pans de séparateur 28 afin de presser ces derniers contre le collecteur,
- on empile l'ensemble du séparateur 28 et de l'électrode positive 26 avec l'électrode négative 30 et on bobine l'empilement.

Ainsi, le séparateur 28 est relié à l'électrode 26 à chacune de ses extrémités et, lorsqu'il est soumis à des variations de température dues au fonctionnement de l'ensemble de stockage d'énergie, il n'est pas susceptible de subir un retrait malgré sa composition.

Dans une variante de ce mode de réalisation, représenté à la figure 6, on relie deux séparateurs 28A, 28B au collecteur 32 du complexe d'électrode positive 26, un des séparateurs étant relié à chaque face de celui-ci pour recouvrir chacun respectivement une électrode 31A, 31B du complexe 26. Les séparateurs 28A, 28B sont dimensionnés pour dépasser du complexe d'électrode positive 26 à l'extrémité de celui-ci opposée à celle de laquelle dépasse le collecteur 32. A cette extrémité, les séparateurs 28A, 28B sont reliés entre eux au niveau d'une interface de liaison 42, encore une fois par collage effectué par refonte locale de la matière. Le principe de ce mode de réalisation est le même que celui décrit précédemment puisqu'aucun séparateur n'est relié aux complexes négatifs, l'ensemble des séparateurs 28A, 28B enveloppant complètement le complexe positif 26. Ainsi, le complexe ne peut entrer en contact avec un complexe adjacent. Le séparateur 28A, 28B est dimensionné suffisamment grand pour que le retrait de celui-ci (à son extrémité non reliée au complexe) n'entraîne pas une contrainte sur l'électrode 26.

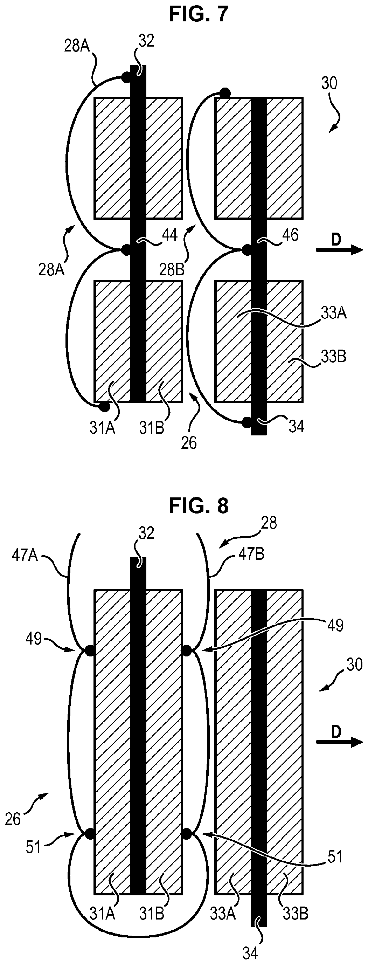

Dans un autre mode de réalisation, représenté à la figure 7, les complexes sont réalisés de sorte que le collecteur 32, 34 dépasse à une extrémité du complexe, comme dans les modes de réalisation précédents, mais également qu'il comprenne une portion centrale 44, 46 exposée. En d'autres termes, la portion centrale 44, 46 n'est recouverte d'électrode 31A, 31B ou 33A, 33B sur aucune de ses faces.

Dans ce mode de réalisation, le séparateur 28A, respectivement 28B, est non seulement relié au complexe à chacune des extrémités de celui-ci selon la direction prédéterminée, mais il est également relié au complexe au niveau de la portion centrale 44, respectivement 46, du collecteur. Cette liaison est réalisée comme les autres par le biais d'un collage par refonte de matière du séparateur 28A, respectivement 28B. Relier le séparateur au complexe également au niveau d'une portion centrale de celui-ci permet alors d'augmenter la tenue mécanique de l'ensemble, les contraintes étant mieux réparties sur le séparateur. Cela est utile surtout lorsque celui-ci est de grande longueur et a donc tendance à subir un retrait important lors de la montée en température de la supercapacité.

Dans encore un autre mode de réalisation, représenté à la figure 8, le séparateur 28 est relié, au niveau de zones référencées 49 et 51 sur la figure 8, par collage au complexe d'électrode positif 26, notamment aux électrodes 31A, 31B, de celui-ci. Il est dimensionné de sorte à entourer le complexe (longueur essentiellement double de celle du complexe) et est relié à chacune des électrodes 31A, 31B en deux zones, situées respectivement au voisinage des bords supérieur et inférieur de l'électrode. Les zones 49 sont situées au voisinage des extrémités du séparateur alors que les zones 51 sont situées en partie centrale de celui-ci. Il comprend également à chacune de ses extrémités un brin libre 47A, 47B, situé au voisinage du bord supérieur de l'électrode. Le retrait du séparateur est évité grâce aux points de collage sur toute sa longueur à l'exception des brins libres. Le retrait des brins libres n'est pas suffisant pour que les électrodes 31A, 31B soient en contact avec l'électrode avec laquelle elles sont en vis-à-vis au voisinage de leur extrémité supérieure.

Bien entendu, l'invention n'est pas limitée aux modes de réalisations décrits ci-dessus.

Par exemple, l'élément capacitif peut être un élément stacké, à savoir il peut être constitué par plusieurs électrodes empilées (au minimum une positive et une négative mais généralement une multitude d'électrodes alternées) et non par des électrodes bobinées.

Le séparateur peut également être relié à l'électrode de façon ponctuelle ou en tout cas pas de façon continue.

Il peut être relié à l'électrode selon plus d'une direction. Il pourrait notamment être relié à l'électrode sur tout son pourtour. Cela est notamment le cas lorsque le séparateur appartient à un élément capacitif stacké.

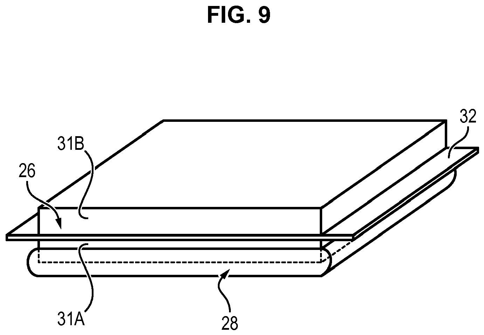

On a ainsi représenté schématiquement sur la figure 9 annexée un séparateur 28 relié à un complexe 26 selon au moins deux directions prédéterminées, plus précisément selon un cadre continu sur tout le pourtour du complexe 26.

Le séparateur peut également être relié directement à une électrode et non au collecteur, de préférence de façon à recouvrir toute la face de celle susceptible d'être en contact avec l'électrode lui faisant face. Les deux extrémités du séparateur peuvent aussi être reliées à deux extrémités distinctes d'une même électrode, par l'intermédiaire ou non d'un collecteur ou de tout autre élément associé.

Le complexe pourrait également comprendre plusieurs portions dépourvues d'électrodes telles que la portion centrale et/ou plusieurs lieux de liaison entre le séparateur et le complexe dans sa portion centrale. Le séparateur pourrait être relié dans cette portion à l'électrode au lieu du collecteur.

Le séparateur peut être relié au collecteur ou à l'électrode, dans sa partie centrale ou au voisinage de ses extrémités. Il pourrait également être relié à un autre élément que le séparateur ou l'électrode, tant que la liaison à cet élément lui permet de recouvrir la face de l'électrode susceptible de se trouver en vis-à-vis avec une électrode adjacente.

On notera également que l'électrode peut ne pas être d'un seul tenant avec un collecteur ou qu'un complexe peut comprendre seulement un collecteur et une seule couche d'électrode.

## Revendications

1. Elément capacitif (24) comprenant au moins deux complexes (26; 30), chaque complexe comprenant au moins une électrode (31, 33), les complexes étant superposés, un séparateur (28A, 28B) isolant électriquement, réalisé en matière plastique poreuse, étant interposé entre chaque paire de complexes, **caractérisé en ce que** le ou au moins l'un des séparateurs (28; 28A, 28B) est interposé entre chaque paire de complexes, dit « premier » et « deuxième » complexes (26, 30), **en ce qu'**il est relié, par collage de la matière plastique fondue, au premier complexe (26, 30), notamment au collecteur (32, 34) de celui-ci, ou à un organe relié à ce premier complexe, au voisinage de l'une de ses extrémités selon une ou au moins l'une des directions prédéterminées normale à la direction de superposition, et **en ce qu'**il est relié au deuxième complexe (30, 26), notamment au collecteur (34, 32) de celui-ci, ou à un organe relié à ce deuxième complexe, au voisinage de l'autre de ses extrémités, selon une ou au moins l'une des directions prédéterminées normale à la direction de superposition.

2. Elément selon la revendication précédente, **caractérisé en ce que** la ou au moins l'une des extrémités du séparateur (28) est agencée sur le complexe de sorte qu'elle recouvre le bord correspondant de l'électrode selon ladite direction prédéterminée.

3. Elément selon la revendication 1 ou 2, **caractérisé en ce qu'**au moins un complexe (26, 30) comprend, outre l'électrode (31, 33), au moins un collecteur (32, 34) de courant métallique d'un seul tenant avec l'électrode.

4. Elément selon la revendication précédente, **caractérisé en ce qu'**au moins un complexe (26, 30) comporte d'un seul tenant deux électrodes (31A, 31B, 33A, 33B) et un collecteur de courant (32, 34) situé entre les deux électrodes.

5. Elément selon l'une des revendications 3 ou 4 en combinaison avec la revendication 2, **caractérisé en ce que** le complexe (26, 30) est configuré de sorte que le collecteur (32, 34) dépasse d'au moins un bord de l'électrode (31A, 31B, 33A, 33B) selon la ou au moins l'une des directions prédéterminées, le ou au moins un des séparateurs adjacents (28; 28A, 28B) étant relié à au moins une de ses extrémités au collecteur (32, 34), dans sa partie dépassant de l'électrode.

6. Elément selon l'une des revendications précédentes, **caractérisé en ce qu'**au moins l'un des séparateurs (28A, 28B) est également relié au complexe (26, 30) dans au moins une portion supplémentaire (44, 46), dite centrale, éloignée de ses deux extrémités.

7. Elément selon l'une quelconque des revendications précédentes, **caractérisé en ce que** le ou au moins l'un des séparateurs (28 ; 28A, 28B) est relié à au moins un complexe adjacent ou à l'organe sur tout le long de son extrémité selon la ou au moins l'une des directions prédéterminées, de préférence continûment.

8. Elément selon l'une quelconque des revendications précédentes, **caractérisé en ce que** le ou au moins l'un des séparateurs est relié à l'un au moins des complexes adjacents ou à l'organe selon au moins deux directions prédéterminées.

9. Elément selon l'une quelconque des revendications précédentes, **caractérisé en ce que** le ou au moins l'un des séparateurs (28; 28A, 28B) est réalisé en polypropylène.

10. Ensemble (10) de stockage d'énergie comprenant un élément capacitif (24) selon l'une quelconque des revendications précédentes.

11. Procédé de fabrication d'un élément capacitif (24) comprenant au moins deux complexes (26; 30), chaque complexe comprenant au moins une électrode (31A, 31B; 33A, 33B), les complexes étant superposés, un séparateur (28; 28A, 28B) isolant électriquement, réalisé en matière plastique poreuse, étant interposé entre chaque paire de complexes, **caractérisé en ce qu'**il comprend les étapes suivantes :
- on superpose au moins un premier complexe (26, 30), comprenant au moins une électrode (31A, 31B; 33A, 33B), un séparateur (28; 28A, 28B) isolant électriquement réalisé en matière plastique poreuse, et un deuxième complexe (30, 26) comprenant au moins une électrode (33A, 33B; 31A, 31B), de sorte que le séparateur (28; 28A, 28B) soit interposé entre deux complexes,
- on chauffe localement le séparateur (28; 28A, 28B) au voisinage de chacune de ses extrémités, selon au moins une direction prédéterminée normale à la direction de superposition, de sorte que la matière plastique fonde et que la matière fondue relie par collage, d'une part, l'une des extrémités du séparateur (28; 28A, 28B) et ledit premier complexe ou un organe relié à ce premier complexe (26, 30) et, d'autre part, l'autre des extrémités du séparateur (28; 28A, 28B) et ledit deuxième complexe (30, 26) ou un organe relié à ce deuxième complexe,
l'étape de chauffage étant effectuée après que le séparateur (28 ; 28A, 28B) ait été superposé au premier complexe (26, 30) et avant ou après qu'il soit superposé avec le deuxième complexe (30, 26).

## Patentansprüche

1. Kapazitives Element (24), umfassend mindestens zwei Komplexe (26; 30), wobei jeder Komplex mindestens eine Elektrode (31, 33) umfass, wobei die Komplexe übereinanderlagern, wobei ein elektrisch isolierender Separator (28A, 28B) aus porösem Kunststoffmaterial zwischen jedem Paar von Komplexen zwischengestellt ist, **dadurch gekennzeichnet, dass** der oder mindestens einer der Separatoren (28; 28A, 28B) zwischen jedes Paar von Komplexen, als "erster" und "zweiter" Komplex (26, 30) bezeichnet, zwischengestellt ist, dass er durch Kleben des geschmolzenen Kunststoffmaterials mit dem ersten Komplex (26, 30), insbesondere mit dem Sammler (32, 34) desselben oder mit einem Organ, das mit diesem ersten Komplex verbunden ist, in der Nähe eines seiner Enden gemäß einer oder mindestens einer der vorbestimmten, zur Überlagerungsrichtung senkrechten, Richtungen verbunden ist, und dass er mit dem zweiten Komplex (30, 26), insbesondere mit dem Sammler (34, 32) desselben oder mit einem Organ, das mit diesem zweiten Komplex verbunden ist, in der Nähe des anderen seiner Enden gemäß einer oder mindestens einer der zur Überlagerungsrichtung vorbestimmten senkrechten Richtungen verbunden ist.

2. Element nach vorangehendem Anspruch, **dadurch gekennzeichnet, dass** das oder mindestens eines der Enden des Separators (28) auf dem Komplex derart ausgebildet ist, dass es den entsprechenden Rand der Elektrode gemäß der vorbestimmten Richtung bedeckt.

3. Element nach Anspruch 1 oder 2, **dadurch gekennzeichnet, dass** mindestens ein Komplex (26; 30) außer der Elektrode (31, 33), mindestens einen mit der Elektrode einstückigen metallischen Stromsammler (32, 34) umfasst.

4. Element nach vorangehendem Anspruch, **dadurch gekennzeichnet, dass** mindestens ein Komplex (26, 30) einstückig zwei Elektroden (31A, 31B, 33A, 33B) und einen Stromsammler (32, 34) aufweist, der sich zwischen den zwei Elektroden befindet.

5. Element nach einem der Ansprüche 3 oder 4 in Kombination mit Anspruch 2, **dadurch gekennzeichnet, dass** der Komplex (26, 30) derart konfiguriert ist, dass der Sammler (32, 34) mindestens einen Rand der Elektrode (31A, 31B, 33A, 33B) gemäß der oder mindestens einer der vorbestimmten Richtungen überragt, wobei der oder mindestens einer der benachbarten Separatoren (28; 28A, 28B) mit mindestens einem seiner Enden mit dem Sammler (32, 34) in seinem Teil der die Elektrode überragt, verbunden ist.

6. Element nach einem der vorangehenden Ansprüche, **dadurch gekennzeichnet, dass** mindestens einer der Separatoren (28A, 28B) in mindestens einem zusätzlichen zentralen Abschnitt (44, 46), der von seinen zwei Enden entfernt ist, ebenfalls mit dem Komplex (26, 30) verbunden ist.

7. Element nach einem der vorangehenden Ansprüche, **dadurch gekennzeichnet, dass** der oder mindestens einer der Separatoren (28; 28A, 28B) mit mindestens einem benachbarten Komplex oder mit dem Organ über die gesamte Länge seines Endes gemäß der oder mindestens einer der vorbestimmten Richtungen vorzugsweise durchgehend verbunden ist.

8. Element nach einem der vorangehenden Ansprüche, **dadurch gekennzeichnet, dass** der oder mindestens einer der Separatoren mit mindestens einem der benachbarten Komplexe oder mit dem Organ gemäß mindestens zwei vorbestimmten Richtungen verbunden ist.

9. Element nach einem der vorangehenden Ansprüche, **dadurch gekennzeichnet, dass** der oder mindestens einer der Separatoren (28; 28A, 28B) aus Polypropylen hergestellt ist.

10. Energiespeichereinheit (10), umfassend ein kapazitives Element (24) nach einem der vorangehenden Ansprüche.

11. Verfahren zur Herstellung eines kapazitiven Elements (24), umfassend mindestens zwei Komplexe (26; 30), wobei jeder Komplex mindestens eine Elektrode (31A, 31B; 33A, 33B) umfasst, wobei die Komplexe übereinanderlagern, wobei ein elektrisch isolierender Separator (28; 28A, 28B) aus porösem Kunststoffmaterial zwischen jedem Paar von Komplexen zwischengestellt ist, **dadurch gekennzeichnet, dass** es die folgenden Schritte umfasst:
- Übereinanderlagern mindestens eines ersten Komplexes (26, 30), umfassend mindestens eine Elektrode (31A, 31B; 33A, 33B), eines elektrisch isolierenden Separators (28; 28A, 28B) aus porösem Kunststoffmaterial und eines zweiten Komplexes (30, 26), umfassend mindestens eine Elektrode (33A, 33B; 31A, 31B) derart, dass sich der Separator (26; 28A, 28B) zwischen zwei Komplexen befindet,
- lokales Erwärmen des Separators (28; 28A, 28B) in der Nähe jedes seiner Enden gemäß mindestens einer zur Überlagerungsrichtung senkrechten vorbestimmten Richtung derart, dass das Kunststoffmaterial schmilzt und dass das geschmolzene Material zum einen eines der Enden des Separators (28; 28A, 28B) und den ersten Komplex oder ein mit diesem ersten Komplex (26, 30) verbundenes Organ und zum anderen das andere der Enden des Separators (28; 28A, 28B) und den zweiten Komplex (30, 26) oder ein mit diesem zweiten Komplex verbundenes Organ durch Kleben verbindet,
wobei der Schritt des Erwärmens durchgeführt wird, nachdem der Separator (28; 28A, 28B) mit dem ersten Komplex (26, 30) überlagert wurde und bevor oder nachdem er mit dem zweiten Komplex (30, 26) überlagert wurde.

## Claims

1. A capacitive element (24) comprising at least two complexes (26; 30), each complex comprising at least one electrode (31, 33), the complexes being superimposed, an electrically insulating separator (28A, 28B) made of porous plastic material being interposed between each pair of complexes, **characterised in that** the or at least one of the separators (28; 28A, 28B) is interposed between each pair of complexes, so-called "first" and "second" complexes (26, 30), **in that** it is connected, by adhesion of the melted plastic material, to the first complex (26, 30), especially to the collector (32, 34) of the latter, or to a member connected to this first complex, in the vicinity of one of its ends in one or at least one of the predetermined directions normal to the superimposition direction, and **in that** it is connected to the second complex (30, 26), especially to the collector (34, 32) of the latter, or to a member connected to this second complex, in the vicinity of the other one of its ends in one or at least one of the predetermined directions normal to the superimposition direction.

2. The element according to the preceding claim, **characterised in that** the or at least one of the ends of the separator (28) is arranged on the complex such that it covers the corresponding edge of the electrode in said predetermined direction.

3. The element according to claims 1 or 2, **characterised in that** at least one complex (26, 30) comprises, apart from the electrode (31, 33), at least one metal current collector (32, 34) as a single piece with the electrode.

4. The element according to the preceding claim, **characterised in that** at least one complex (26, 30) includes as a single piece two electrodes (31A, 31B, 33A, 33B) and a current collector (32, 34) located between the two electrodes.

5. The element according to one of claims 3 or 4 in combination with claim 2, **characterised in that** the complex (26, 30) is configured such that the collector (32, 34) exceeds at least one edge of the electrode (31A, 31B, 33A, 33B) in the or at least one of the predetermined directions, the or at least one of the adjacent separators (28; 28A, 28B) being connected to at least one of its ends to the collector (32, 34), in its part exceeding from the electrode.

6. The element according to one of the preceding claims, **characterised in that** at least one of the separators (28A, 28B) is also connected to the complex (26, 30) in at least one additional portion (44, 46), so-called central portion, away from its two ends.

7. The element according to any one of the preceding claims, **characterised in that** the or at least one of the separators (28; 28A, 28B) is connected to at least one adjacent complex or to the member all along its end in the or at least one of the predetermined directions, preferably continuously.

8. The element according to any one of the preceding claims, **characterised in that** the or at least one of the separators is connected to at least one of the adjacent complexes or to the member in at least two predetermined directions.

9. The element according to any one of the preceding claims, **characterised in that** the or at least one of the separators (28; 28A, 28B) is made of polypropylene.

10. An assembly (10) for storing energy comprising a capacitive element (24) according to any one of the preceding claims.

11. A method for manufacturing a capacitive element (24), comprising at least two complexes (26; 30), each complex comprising at least one electrode (31A, 31B; 33A, 33B), the complexes being superimposed, an electrically insulating separator (28; 28A, 28B), made of porous plastic material, being interposed between each pair of complexes, **characterised in that** it comprises the following steps:
- at least a first complex (26, 30), comprising at least one electrode (31A, 31B; 33A, 33B), an electrically insulating separator (28; 28A, 28B) made of porous plastic material, and a second complex (30, 26) comprising at least one electrode (33A, 33B; 31A, 31B) are superimposed such that the separator (28; 28A, 28B) is interposed between two complexes,
- the separator (28; 28A, 28B) is heated locally in the vicinity of each of its ends in at least one predetermined direction normal to the superimposition direction, such that the plastic material melts and the melted material connects by adhesion on the one hand one of the ends of the separator (28; 28A, 28B) and said first complex or a member connected to this first complex (26, 30) and on the other hand the other of the ends of the separator (28; 28A, 28B) and said second complex (30, 26) or a member connected to this second complex,
the heating step being performed after the separator (28; 28A, 28B) has been superimposed on the first complex (26, 30) and before or after it is superimposed on the second complex (30, 26).
